# EUROPÄISCHE PATENTSCHRIFT

(11) **EP 2 407 388 B1**
(45) Veröffentlichungstag und Bekanntmachung des Hinweises auf die Patenterteilung: **16.01.2013**
(21) Anmeldenummer: 11005411.1
(22) Anmeldetag: 01.07.2011
(51) Int. Cl.: B65B 43/46, B65B 7/16, B65G 47/90

(54) **Greifersystem für eine Schalenverschließmaschine**
Gripper system for a shell closing machine
Système de prise pour une machine de fermeture de coques

(30) Priorität: 15.07.2010 DE 102010027211
(43) Veröffentlichungstag der Anmeldung: 18.01.2012
(73) Patentinhaber: Multivac Sepp Haggenmüller GmbH & Co. KG, 87787 Wolfertschwenden (DE)
(72) Erfinder: Ickert, Lars, 87437 Kempten (DE)
(74) Vertreter: Grünecker, Kinkeldey, Stockmair & Schwanhäusser

(56) Entgegenhaltungen:
- EP-A1- 0 559 291
- WO-A1-2007/107703
- AU-A- 4 141 068
- DE-A1-102008 030 510

## Beschreibung

Die Erfindung bezieht sich auf ein Greifersystem für eine Schalenverschließmaschine gemäß dem Oberbegriff des Anspruchs 1 sowie auf ein Verfahren gemäß dem Oberbegriff des Anspruchs 7.

Bei Schalenverschließmaschinen werden Schalen auf einem Zuführförderer bis zu einer Siegelstation herantransportiert. Das Umsetzen der Schalen von dem Zuführförderer in die Siegelstation wird üblicherweise bei einspurigen Schalenverschließmaschinen mittels eines Greifersystems ausgeführt. Dieses besteht beispielsweise bei einem aus der DE 10 2008 030 510 A1 bekannten Greifersystem aus zwei Greiferarmen, die die auf dem Zuführförderer bereitgestellten Schalen seitlich ergreifen. Dabei ist es möglich, dass der Zuführförderer stillsteht oder weiterläuft. In Fall des Weiterlaufens synchronisieren sich die Greiferarme in Transportrichtung mit der Bewegung der Schalen. Nachdem die Greiferarme sich an die Schalen angelegt haben, erfolgt die Bewegung in Richtung der Siegelstation. Diese Transportbewegung der Greiferarme erfolgt unabhängig von der Transportgeschwindigkeit des Zuführförderers. Dabei tritt zwischen dem Boden der Schale und dem Transportband des Zuführförderers eine Friktion auf.

Bei öligen und fettigen Produkten verliert das Transportband zum Teil seine Friktion und die Schalen verlieren während der Bewegung auf dem Transportband des Zuführförderers durch Verrutschen ihre vorbestimmte Position, die zur Aufnahme durch die Greiferarme notwendig ist. Um dieses Problem zu beheben, werden Transportbänder mit sehr hoher Friktion eingesetzt. Dabei kommt es aufgrund der unterschiedlichen Verschmutzung zu Unregelmäßigkeiten des Reibungskoeffizienten zwischen Transportband und Boden der Schale. Eine zu hohe Friktion wirkt sich nachteilig beim Transport der Schalen durch die Greiferarme in die Siegelstation aus, da es hierbei zu der hohen Friktion am Boden der Schale kommt und die Schale zum Kippen neigt. Vor allem bei hohen Schalen ist dieses Problem sehr ausgeprägt. Ist dabei das Produkt in flüssiger Form vorhanden, kommt es zum teilweisen Auslaufen oder Überschwappen von Produkten auf das Transportband oder in der Siegelstation. Maschinenstillstände zu Reinigungszwecken sind die Folge, und es kommt zu erhöhtem Ausschuss von untergewichtigen Verpackungen.

Um eine hohe Produktionsleistung von zu verpackenden Schalen zu gewährleisten, dürfen sich Greiferarme und Transportband nicht über den gesamten Bewegungsverlauf, während sich die Schalen noch auf dem Transportband des Zuführförderers befinden und dabei von den Greiferarmen in die Siegelstation transportiert werden, synchron zueinander bewegen, um unabhängig von der Friktion zu sein.

Das Transportband muss, nachdem die Greiferarme die Schalen erfasst haben, die nächsten von einem Zuführsystem zugeführten Schalen übernehmen und in einen festgelegten Abstand zueinander bringen. Dies führt zu einem Bewegungsprofil, das sich nicht mit der Greiferarmbewegung in Übereinstimmung bringen lässt.

Aufgabe der vorliegenden Erfindung ist es, ein Greifersystem für eine Schalenversiegelungsmaschine und ein Verfahren zum Betrieb einer Schalenversiegelungsmaschine zur Verfügung zu stellen, bei denen die vorstehend beschriebenen Nachteile beseitigt werden können und insbesonderte ein schnelles und sicheres Erfassen der Schale möglich ist.

Diese Aufgabe wird gelöst durch ein Greifersystem mit den Merkmalen des Anspruchs 1 bzw. durch ein Verfahren zum Betrieb einer Schalenversiegelungsmaschine nach Anspruch 7. Vorteilhafte Weiterbildungen der Erfindung sind in den Unteransprüchen angegeben.

Das erfindungsgemäße Greifersystem für eine Schalenverschließmaschine zum Transportieren von Schalen umfasst wenigstens zwei Greiferarme mit einem Vertikalförderer bzw. (im Folgenden als Synonym verwendet:) einer Anhebevorrichtung zum Anheben von Schalen. Die Anhebevorrichtung ist zur Umwandlung einer Schließbewegung der Greiferarme zueinander in eine Hubbewegung des Tragorgans ausgebildet. Das Anheben der Schalen stellt sicher, dass kein Kontakt zwischen dem Boden der Schale und dem Zuführförderer besteht und somit die Bewegungen des Greifersystems gegenüber der Bewegung des Zuführförderers friktionslos und unabhängig erfolgen können. Da die Anhebevorrichtung die Schalen relativ zum Greiferarm anhebt, muss der Greiferarm selbst nicht mehr angehoben werden, so dass dessen Bewegung schneller und einfacher wird.

Die Bewegung der Anhebevorrichtung zum Anheben der Schalen ist gegen Ende der Schließbewegung der Greiferarme zueinander ausführbar, sobald das Tragorgan mit der Schale bzw. dem Schalenrand in Kontakt kommt. In diesem Bereich der Bewegung führen die Greiferarme eine annähernd zum Zuführförderer parallele Schließbewegung aus. Diese Schließbewegung wird über den Mechanismus und das Anliegen des Tragorgans an einer Unterseite des Schalenrandes in eine Bewegung umgesetzt, die das Anheben der Schale bewirkt.

Die Anhebevorrichtung, die an wenigstens zwei Greiferarmen angebracht ist, weist dabei bevorzugt, eine oder mehrere Blattfedern auf. Die Federrate der Blattfeder bewirkt, dass trotz gleichmäßiger Schließbewegung der Greiferarme im Moment des Kontaktes des Tragorgans mit der Schale kein Stoß auf die Schale ausgeübt wird, sondern die Blattfeder gespannt wird und das Anheben somit sanft erfolgen kann. Dies verhindert ein Überschwappen von beispielsweise flüssigen Produkten aus der Schale bei gleichzeitig hoher Förderleistung.

Eine zum Zuführförderer parallel liegende Schwenkachse des Anhebe-Mechanismus ermöglicht mittels der Blattfeder, dass das Tragorgan an einem Ende der Blattfeder bzw. die Blattfeder selbst um die Schwenkachse schwenkbar ist und die Schale um bis zu 10 mm anheben kann, was mit der bisher bekannten Lösung nicht möglich ist.

Dabei kann die Schwenkachse als Scharnier ausgebildet sein, das mit einer Seite am Greiferarm befestigt ist, während die Blattfeder mit der anderen Seite verbunden ist. Die Schenkachse kann aber auch durch die Blattfeder selbst gebildet sein, wenn die Blattfeder an dem Greiferarm direkt befestigt ist und ab der Befestigung schwenkbar durch die eigene Fähigkeit zur Biegung ausgeführt ist.

Vorzugsweise erfolgt der Antrieb der Schließbewegung mit einem servogesteuerten Antrieb, da somit das Bewegungsprofil der Schließarme und auch davon abhängig die Hubbewegung der Schale präzise gesteuert werden können, so dass trotz hoher Beschleunigungen und Geschwindigkeiten die Schalen schonend und sicher bewegt werden.

Die Anhebevorrichtung mit dem Tragorgan nimmt die Schale vorteilhafterweise an der Unterkante des Schalenrandes form- und/oder kraftschlüssig auf. Dies sichert auch die Schale am Greifersystem während der Transportbewegung in Richtung einer Arbeitsstation oder aus der Arbeitsstation heraus.

Das Tragorgan ist vorzugsweise als Leiste ausgeführt, die am frei bewegbaren Ende an der oder den Blattfedern angebracht ist und austauschbar sein kann, um diese bei Formschluss der Geometrie des Schalenrandes anpassen zu können. Es ist auch denkbar, dass die Blattfeder selbst als Tragorgan ausgeführt ist.

Nach dem erfindungsgemäßen Verfahren der Schalenversiegelungsmaschine umfasst das Greifersystem zum Transportieren von Schalen eine Anhebevorrichtung, die an einem Greiferarm angebracht ist, und die mittels eines Mechanismus die Schließbewegung der Greiferarme, durch die die Schalen ergriffen werden, in eine Hubbewegung der Schale gegenüber dem Zuführförderer umwandelt, damit die Schale am Ende der Bewegung nicht mehr mit dem Zuführförderer in Kontakt steht.

Die Umsetzung der Schließbewegung in die Hubbewegung erfolgt vorzugsweise gegen Ende der Schließbewegung der Greiferarme, um bis zum Zeitpunkt der Umsetzung die Greiferarme mit maximaler Geschwindigkeit bewegen zu können, um die Leistung der Schalenversiegelungsmaschine nicht einzuschränken.

Am Ende der Transportbewegung der Schalen in eine Arbeitsstation erfolgt eine Öffnungsbewegung der Greiferarme und dabei werden die Schalen abgesenkt. Diese Bewegung erfolgt weitgehend vertikal nach unten.

Zum Zeitpunkt, an dem das Tragorgan mit dem Schalenrand in Berührung kommt, wird die Schließbewegung der Greiferarme fortgesetzt, die wiederum eine zum Zuführförderer annähernd horizontale Bewegung ist. Die Schale mit Produkten hat eine Gewichtkraft, die von dem Mechanismus am Greiferarm überwunden werden muss, um die Schale anzuheben. Die Schließbevvegung der Greiferarme führt zu einem Spannen der Blattfeder, da sich die Lage eines Endes der Blattfeder am Schalenrand nicht verändert und das andere Ende der Blattfeder am Greiferarm sich weiter der Schale annährt, führt dies zu einer Biegung und damit zu einer Spannung der Blattfeder. Die durch die Schließkraft erzeugte Spannung der Blattfeder wird solange fortgesetzt, bis die Kraft der Spannung der Blattfeder die Gewichtskraft der Schale oder Schalen erreicht ist. Die weitere Schließkraft führt nicht nur zu einer weiteren Spannung der Blattfeder, sondern auch zum Anheben der Schale. Durch die ansteigende und nicht schlagartig auftretende Spannung der Blattfeder wird die Schale schonend angehoben, so dass es zu keinen Verlusten von Produkten aus der Schale kommt.

Im Folgenden wird ein vorteilhaftes Ausführungsbeispiel der Erfindung anhand einer Zeichnung näher dargestellt.
- Figur 1: zeigt eine schematische Ansicht einer Schalenverschließmaschine,
- Figur 2: zeigt eine Ansicht eines Greifersystems in geöffneter Stellung,
- Figur 3: zeigt eine Ansicht eines Greifersystems in geschlossener Stellung,
- Figur 4a: zeigt eine Ansicht in Transportrichtung eines erfindungsgemäßen Greifersystems in geöffneter Stellung,
- Figur 4b: zeigt eine Ansicht in Transportrichtung eines erfindungsgemäßen Greifersystems in der Schließbewegung und in Kontakt mit einer Schale,
- Figur 4c: zeigt eine Ansicht in Transportrichtung eines erfindungsgemäßen Greifersystems in geschlossener Stellung und angehobener Schale und
- Figur 5: zeigt eine Ansicht von oben auf ein erfindungsgemäßes Greifersystem in geöffneter Stellung.

Gleiche Komponenten sind in den Figuren durchgängig mit gleichen Bezugszeichen versehen.

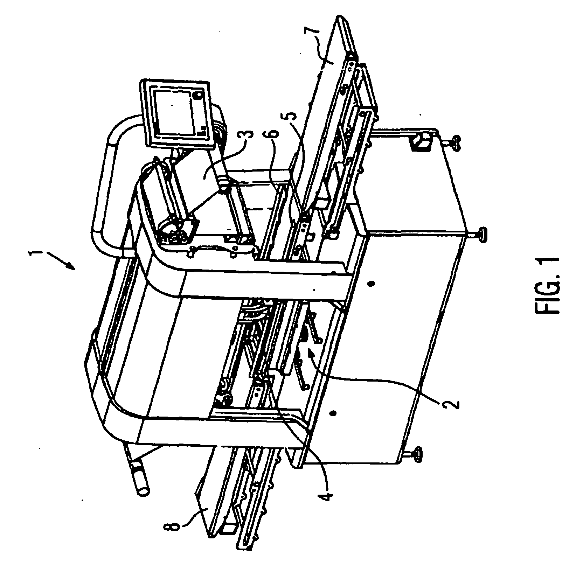

Figur 1 zeigt eine Schalenverschließmaschine 1 mit einer Arbeitsstation 2, die nicht dargestellte Schalen mit einer Deckelfolie 3 versiegelt, und einem Greifersystem 4 mit einem ersten Greiferarm 5 und einem zweiten Greiferarm 6, das die Schalen von einem Zuführförderer 7 in die Arbeitsstation 2 bewegt. Nach dem Siegelvorgang in der Arbeitsstation 2 werden die versiegelten Schalen mittels des Greifersystems 4 aus der Arbeitsstation 2 heraustransportiert und auf einem Abführband 8 abgelegt und dem nächsten Prozessschritt zugeführt.

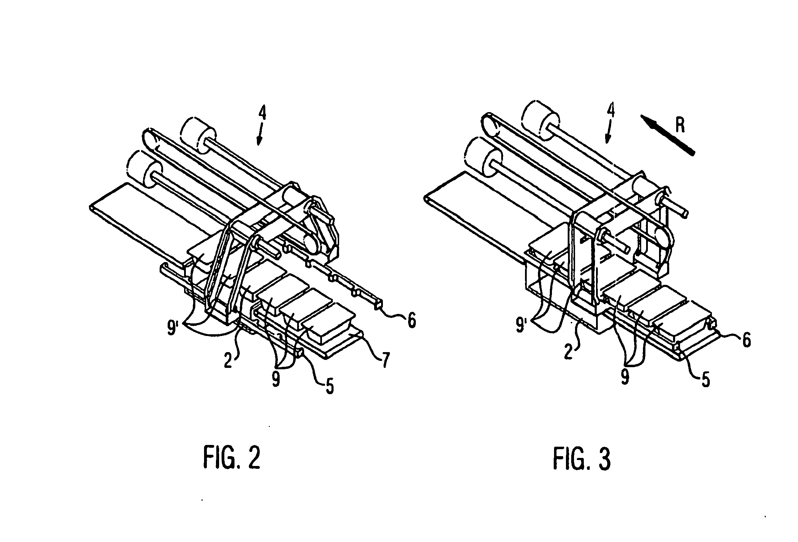

In Figur 2 ist das Greifersystem 4 in geöffneter Stellung dargestellt. Auf dem Zuführband 7 befinden sich drei Schalen 9 und in der Arbeitsstation 2 ebenfalls drei Schalen 9'.Die Greiferarme 5, 6 sind in geöffneter Stellung.

In Figur 3 ist das Greifersystem 4 in geschlossener Stellung gezeigt. Die Greiferarme 5, 6 sind zueinander an die Schalen 9 bewegt worden und stehen mit den Schalen 9 in Kontakt. Anschließend transportiert das Greifersystem 4 die Schalen 9 vom Zuführförderer 7 in einer Transportrichtung R in die Arbeitsstation 2 und dabei auch die drei Schalen 9' aus der Arbeitsstation 2 auf das Abführband 8.

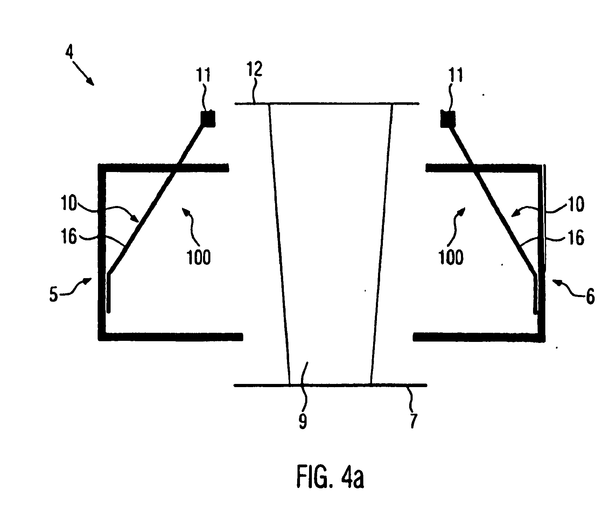

Ein erfindungsgemäßes Greifersystem 4 ist in Figur 4a dargestellt. Beide Greifer 5, 6 weisen jeweils eine Anhebevorrichtung 100 auf, die an dem jeweiligen Greiferarm 5, 6 auf der den Schalen 9 zugewandten Seite montiert ist. Die Anhebevorrichtungen 100 umfassen jeweils ein Tragorgan 10 mit einer Leiste 11. Dabei ist das Tragorgan 10 mit dem Greiferarm 5, 6 fest verbunden, und die Leiste 11 ist mit einer oder mehreren Blattfedern 16 am jeweiligen Greiferarm 5, 6 montiert. Die Leiste 11 und die Blattfedern 16 können auch einteilig ausgeführt sein z.B. in einer ausgestanzten Ausführung aus Federstahl. Die Schale 9 hat einen umlaufenden Schalenrand 12. Die Anhebevorrichtung 100 umfasst das Tragorgan 10, die Leiste 11 und die Blattfedern 16.

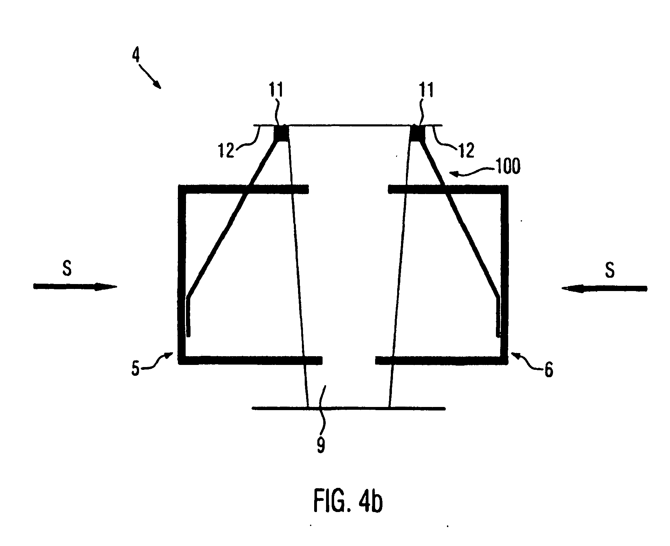

In Figur 4b sind die Greiferarme 5, 6 in ihrer aufeinander zu gerichteten, im Wesentlichen horizontalen Schließbewegung S zur Schale 9 hin dargestellt. Die Leiste 11 kommt dabei mit dem Schalenrand 12 in Kontakt, wobei die Schließbewegung S weiter fortgesetzt wird.

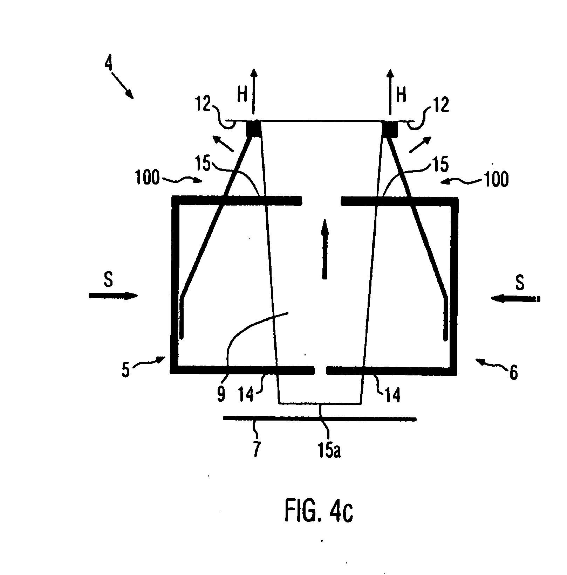

In Figur 4c ist die Schließbewegung S abgeschlossen und die Greiferarme 5, 6 stehen mit der Schale 9 im unteren Bereich 14 und/oder im oberen Bereich 15 in Kontakt. Dabei liegt ein Formund/oder Kraftschluss vor, bei dem die Schale 9 unterhalb ihres Randes 12 seitlich erfasst wird. Das Tragorgan 10 hebt dabei den von ihm untergriffenen Schalenrand 12 bzw. die Schale 9 nach oben annähernd vertikal an und somit entsteht ein Abstand des Bodens 15a zum Zuführförderer 7. Die Bewegungen des Greifersystems 4 in Transportrichtung R und die Bewegung des Zuführförderers 7 können somit getrennt gesteuert werden, ohne dass gegenseitig negative Auswirkungen auftreten.

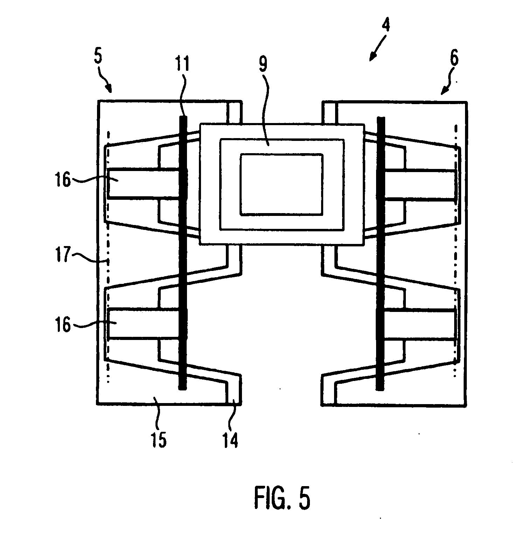

Figur 5 zeigt eine Draufsicht des erfindungsgemäßen Greifersystems 4 mit einer Leiste 11 und zwei Blattfedern 16 für die gleichzeitige Aufnahme von zwei Schalen 9. Die Leiste 11 kann auch zweigeteilt auf je ein Tragorgan 10 sein oder einteilig aus Federblech ausgestanzt und an den Greiferarm 5, 6 z.B. durch Schweißung angebracht. Es ist auch eine Variante denkbar, bei der das Tragorgan 10 ein Scharnier umfasst, um die seitliche Auslenkung zu ermöglichen, wobei die federnde Wirkung mittels einer Feder realisiert ist.

Die seitliche Auslenkung der Blattfedern 16 ist über die Schwenkachse 17 realisiert, die in einer Variante als Scharnier ausgestaltet sein kann.

## Patentansprüche

1. Greifersystem (4) für eine Schalenverschließmaschine (1) zum Transportieren von Schalen (9), wobei das Greifersystem (4) wenigstens zwei Greiferarme (5, 6) umfasst, **dadurch gekennzeichnet, dass** an jedem Greiferarm (5, 6) eine Anhebevorrichtung (100) zum Anheben der Schalen (9) relativ zum Greiferarm (5, 6) vorgesehen ist, wobei die Anhebevorrichtung (100) ein Tragorgan (10) zum Tragen eines Randes (12) der Schale (9) aufweist und zur Umwandlung einer Schließbewegung (S) der Greiferarme (5, 6) zueinander in eine Hubbewegung (H) des Tragorgans (10) konfiguriert ist.

2. Greifersystem nach Anspruch 1, **dadurch gekennzeichnet, dass** die Anhebevorrichtung (100) eine oder mehrere Blattfedern (16) aufweist.

3. Greifersystem nach Anspruch 2, **dadurch gekennzeichnet, dass** die Blattfeder (16) um eine parallel zum Zuführförderer (7) liegenden Schwenkachse (17) schwenkbar ist.

4. Greifersystem nach einem der vorigen Ansprüche, **dadurch gekennzeichnet, dass** die Schließbewegung (S) der Greiferarme (5, 6) mittels eines servomotorischen Antriebs angetrieben ist.

5. Greifersystem nach einem der vorigen Ansprüche, **dadurch gekennzeichnet, dass** die Greiferarme (5, 6) zur form- und/oder kraftschlüssigen Aufnahme von Schalen (9) ausgebildet sind.

6. Greifersystem nach einem der vorangehenden Ansprüche, **dadurch gekennzeichnet, dass** eine Leiste (11), die die Schale (9) am Schalenrand (12) aufnimmt, mittels wenigstens einer Blattfeder (16) mit einem Greiferarm (5, 6) verbunden ist.

7. Verfahren zum Betrieb einer Schalenversiegelungsmaschine (1) mit einem Greifersystem (4) zum Transportieren von Schalen (9), wobei das Greifersystem (4) mindestens zwei Greiferarme (5, 6) aufweist, **dadurch gekennzeichnet, dass** eine Anhebevorrichtung (100) an mindestens einem Greiferarm (5, 6) eine Schließbewegung (S) der Greiferarme (5, 6) zum Erfassen der Schalen (9) in eine Hubbewegung (H) der Schalen (9) gegenüber dem Zuführförderer (7) umwandelt.

8. Verfahren nach Anspruch 7, **dadurch gekennzeichnet, dass** das Anheben der Schale (9) gegen Ende der Schließbewegung (S) der Greiferarme (5, 6) erfolgt.

9. Verfahren nach einem der Ansprüche 7 oder 8, **dadurch gekennzeichnet, dass** die Anhebevorrichtung (100) bei einer Öffnungsbewegung der Greiferarme (5, 6) die Schalen (9) absenkt.

10. Verfahren nach einem der Ansprüche 7 bis 9, **dadurch gekennzeichnet, dass** die Kraft zum Anheben der Schale (9) mittels der Anhebevorrichtung (100) durch die Schließkraft der Greiferarme (5, 6) aufgebracht wird.

## Claims

1. A gripper system (4) for a tray sealer (1) for conveying trays (9), the gripper system (4) comprising at least two gripper arms (5, 6), **characterised in that** a lifting device (100) is provided on each gripper arm (5, 6) for lifting the trays (9) relative to the gripper arm (5, 6), the lifting device (100) having a carrying member (10) for carrying an edge (12) of the tray (9) and being configured to convert a closing movement (S) of the gripper arms (5, 6) towards one another into a lifting movement (H) of the carrying member (10).

2. A gripper system according to claim 1, **characterised in that** the lifting device (100) comprises one or more leaf springs (16).

3. A gripper system according to claim 2, **characterised in that** the leaf spring (16) is swivellable about a swivel axis (17) parallel to the feed conveyor (7).

4. A gripper system according to any one of the preceding claims, **characterised in that** the closing movement (S) of the gripper arms (5, 6) is driven by means of a servo motor drive.

5. A gripper system according to any one of the preceding claims, **characterised in that** the gripper arms (5, 6) are constructed to accommodate trays (9) in form-fitting and/or force-locking manner.

6. A gripper system according to any one of the preceding claims, **characterised in that** a strip (11), which accommodates the tray (9) at the tray edge (12), is connected to a gripper arm (5, 6) by means of at least one leaf spring (16).

7. A method of operating a tray sealer (1) with a gripper system (4) for conveying trays (9), the gripper system (4) comprising at least two gripper arms (5, 6), **characterised in that** a lifting device (100) on at least one gripper arm (5, 6) converts a closing movement (S) of the gripper arms (5, 6) for grasping the trays (9) into a lifting movement (H) of the trays (9) relative to the feed conveyor (7).

8. A method according to claim 7, **characterised in that** lifting of the tray (9) proceeds towards the end of the closing movement (S) of the gripper arms (5, 6).

9. A method according to either one of claims 7 or 8, **characterised in that** the lifting device (100) lowers the trays (9) on an opening movement of the gripper arms (5, 6).

10. A method according to any one of claims 7 to 9, **characterised in that** the force for lifting the tray (9) by means of the lifting device (100) is applied by the closing force of the gripper arms (5, 6).

## Revendications

1. Système préhenseur (4) pour une machine de fermeture de coques (1) pour le transport de coques (9), dans lequel le système préhenseur (4) comporte au moins deux bras préhenseurs (5, 6), **caractérisé en ce qu'**un dispositif de levage (100) pour lever les coques (9) par rapport aux bras préhenseurs (5, 6) est pourvu sur chaque bras préhenseur (5, 6), dans lequel le dispositif de levage (100) comporte un organe de support (10) pour supporter un bord (12) des coques (9) et est configuré pour la conversion d'un mouvement de fermeture (S) des bras préhenseurs (5, 6) l'un vers l'autre en un mouvement de levage (H) de l'organe de support (10).

2. Système préhenseur selon la revendication 1, **caractérisé en ce que** le dispositif de levage (100) comporte un ou plusieurs ressorts à lame (16).

3. Système préhenseur selon la revendication 2, **caractérisé en ce que** le ressort à lame (16) peut pivoter autour d'un axe de pivotement (17) agencé parallèlement au convoyeur d'alimentation (7).

4. Système préhenseur selon l'une des revendications précédentes, **caractérisé en ce que** le mouvement de fermeture (S) des bras préhenseurs (5, 6) est effectué par un entraînement à servomoteur.

5. Système préhenseur selon l'une des revendications précédentes, **caractérisé en ce que** les bras préhenseurs (5, 6) sont constitués pour la réception de coques par un engagement de formes et/ou de forces (9).

6. Système préhenseur selon l'une des revendications précédentes, **caractérisé en ce qu'**un arceau (11) qui saisit la coque (9) par le bord de coque (12) est connecté par au moins un ressort à lame (16) à un bras préhenseur (5, 6).

7. Procédé d'exploitation d'une machine de scellement de coques (1) avec un système préhenseur (4) pour transporter des coques (9), dans lequel le système préhenseur (4) comporte au moins deux bras préhenseurs (5, 6), **caractérisé en ce qu'**un dispositif de levage (100) sur au moins un bras préhenseur (5, 6) convertit un mouvement de fermeture (S) des bras préhenseurs (5, 6) pour saisir les coques (9) en un mouvement de levage (H) des coques (9) par rapport au convoyeur d'alimentation (7).

8. Procédé selon la revendication 7, **caractérisé en ce que** le levage des coques (9) se produit vers la fin du mouvement de fermeture (S) des bras préhenseurs (5, 6).

9. Procédé selon l'une des revendications 7 ou 8, **caractérisé en ce que** le dispositif de levage (100) abaisse les coques (9) par un mouvement d'ouverture des bras préhenseurs (5, 6).

10. Procédé selon l'une des revendications 7 à 9, **caractérisé en ce que** la force de levage des coques (9) est mise en oeuvre au moyen d'un dispositif de levage (100) par la force de fermeture des bras préhenseurs (5, 6).
